# EUROPEAN PATENT SPECIFICATION

(11) **EP 1 514 026 B1**
(45) Date of publication and mention of the grant of the patent: **28.03.2007**
(21) Application number: 03756410.1
(22) Date of filing: 28.05.2003
(51) Int. Cl.: F03G 3/06

(54) **INERTIA MECHANISM ENABLING TRANSFORMATION OF AN OSCILLATORY MOTION INTO A ONE-WAY CIRCULAR MOTION**
MASSENTRÄGHEITSMECHANISMUS ZUR TRANSFORMATION EINER OSZILLIERENDEN BEWEGUNG IN EINE EINWEGKREISBEWEGUNG
MECANISMES D'INERTIE PERMETTANT LA TRANSFORMATION D'UNE OSCILLATION EN UN MOUVEMENT CIRCULAIRE UNIDIRECTIONNEL ET LEUR PROCEDE DE COMMANDE

(30) Priority: 31.05.2002 YU 39902
(43) Date of publication of application: 16.03.2005
(73) Proprietor: Petrovic, Tomislav, 18000 Nis (YU)
(72) Inventor: Petrovic, Tomislav, 18000 Nis (YU)
(74) Representative: Engel, Christoph Klaus
(86) International application number: PCT/YU2003/000015
(87) International publication number: WO 2003/102376

(56) References cited:
- EP-A- 0 882 875
- DE-C- 348 110
- DE-C- 3 437 841
- GB-A- 234 317
- JP-A- 10 089 075
- US-A- 4 274 367
- US-A- 4 516 539

## Description

### Field of the application

This invention is applicable to mechanical engineering, i.e. driving machines, or more precisely to the mechanisms providing transformation of oscillatory motion into one-way circular motion. According to the International Classification of Patents this invention is designated as follows: **F01C9/00.**

### Technical issue

This invention solves the problem of transformation of oscillatory motion (either a straight-line or circular) into one-way circular motion without any force providing for the high efficiency (mechanical), by means of the newly formed principle of inertial transformation of motion.

### State of engineering

The transformation of motion has been performed exclusively by means of mechanisms which were forced to move, i.e., that had only one degree of freedom. One parameter (an angle or movement of some element) is used to describe motion of other elements in the mechanism. The principle of forced motion implies that movement of one element forces the other elements of the mechanism to move according to a previously defined law of motion. Different mechanisms can be used to provide for the transformation of oscillatory into one way-circular motion, but the best known and most frequently used one is the piston mechanism providing the straight-line oscillatory motion of the piston with a crank-shaft rotation in one direction. The basic disadvantage of such a mechanism is its very low coefficient of efficiency of the transformation. The forcing character of transformation causes it, because the peek value of the curvature defining the pressure within the cylinder does not coincide with the mechanism optimal angle of transformation.

In DE 30. 14 770 A1, an inertial mechanism for.the transmission of longitudinal movement into rotary motion is disclosed. A body rotates around its pivotal point. Explosive momentums force this pivotal point into a bidirectional longitudinal movement that causes a powering of the rotation. The rotation of the oscillating pivotal point is transmitted via spherical joints to a stationary pivotal point. This stationary pivotal point can be used for coupling a gear to be driven. It is an object of the present invention to provide a mechanism for the transformation of oscillatory displacements into one-way circular motion with a high efficiency. This object is achieved by a mechanism according to claim 1.

### Essence of invention

The main element of the mechanism is a pendulum with a movable suspension. Generally speaking, the mechanism is characterized by two degrees of freedom: pendulum angle ϕ and straight-line or circular oscillating suspension displacement *s*. The short impulsive displacement of the point *A* at the angle ϕ=0, π, 2π ... in the direction reverse to those of instantaneous velocity of the mass m provides a one-way rotation of the pendulum with mass m and length *l*. The mechanism has a variable structure therefore it has two degrees of freedom (ϕ,*s*) during the interval of the point *A* traveling, both of which are included in the dynamic parameters of the system, whereas in other intervals the mechanism retains only one degree of freedom (ϕ). Motion transformation is performed in the intervals with two degrees of freedom (which provides its forceless motion), whereas in the intervals with one degree of freedom the mechanism motion is performed by means of inertia. The transformation of motion can be performed in any plane; however the pendulum motion is the steadiest within the equipotential plane. Different actuators (pneumatic, hydraulic, piezoelectric, etc.) can be used to provide impulsive oscillating motion, however in practice the most important motion is performed by expansion caused by fuel combustion within the cylinders with straight-line motion.

The major advantage of this mechanism in reference to the existing ones is its high coefficient of efficiency since the maximum pressure of combustion gases can be achieved by selecting the appropriate moment of its application which can coincide with the optimal mechanism parameters, thus enabling motion transformation. The dynamically balanced mechanism can be achieved by means of symmetrically arranged elements in which both the internal and the external forces are kept at balance within the designed structure throughout all periods of motion.

### Short description of figures

The invention is outlined in details so that:

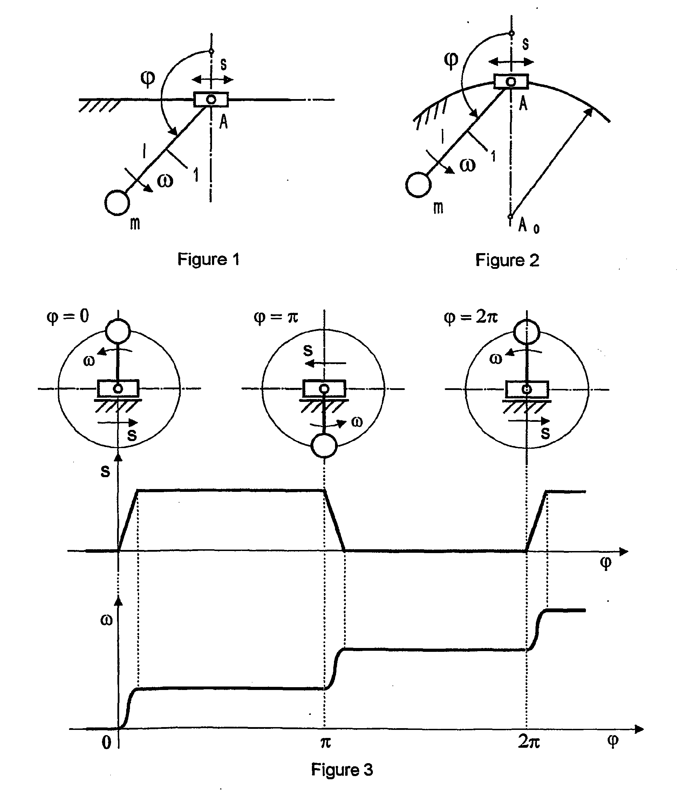

- Fig. 1: presents a motion transformation mechanism with straight-line movement of the pendulum suspension;
- Fig. 2: presents a motion transformation mechanism with circular movement of the pendulum suspension;
- Fig. 3: presents the mode of control and the diagrams showing different phases of the mechanism motion;
- Fig. 4: presents a general structural design of the mechanism according to the invention with flexible fixing of the oscillating and driving levers;
- Fig. 5: presents a structural design of the mechanism according to the invention with sliding connection between the oscillating and driving levers;
- Fig. 6: presents a partially balanced mechanism according to the invention, which is realized by means of two pendulums; and
- Fig. 7: presents a completely balanced mechanism according to the invention, which is realized by means of four pendulums.

### Detailed description

This inertial mechanism which provides the transformation of oscillating motion into one-way circular motion is a combination of a pendulum 1 together with a movable suspension and a planetary gear. The mode of control of the newly formed mechanism with variable structure enables the pendulum 1 one-way circular motion during the pendulum suspension oscillating movement. The transformation of motion is carried out so that for an angle of ϕ=0, π, 2π ... defining the position of the pendulum, there is a short-lived displacement of the pendulum suspension of magnitude 5 in the direction reverse to that of the instantaneous velocity of the mass m.

In other intervals the displacement of pendulum suspension 1 is prevented by means of control signals and the appropriate elements which provide one-way linear motion of pendulum 1 having angular velocity ω.

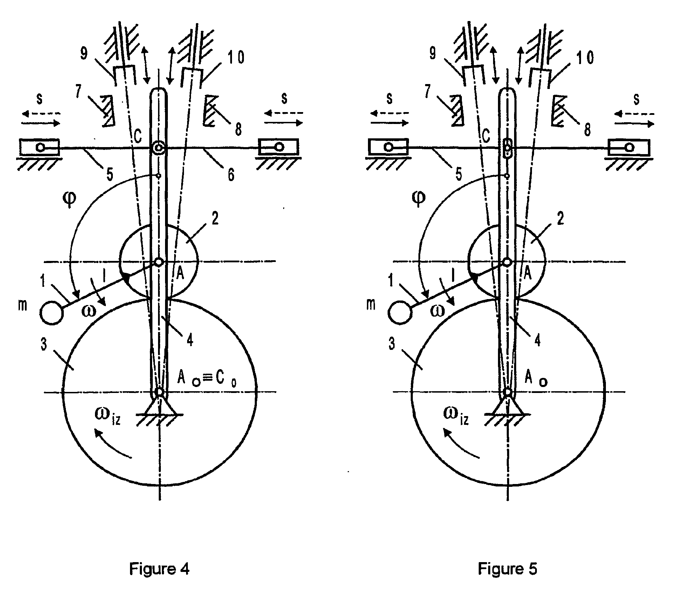

The application of the newly formed principle of motion transformation makes it possible to construct the mechanism, that is presented in Figure 4. The pendulum 1 having the mass *m* and the length *l* is rigidly attached to a planetary gear 2. These two elements are flexibly connected to the oscillating lever 4 at the point *A*. The planetary gear 2 and a sun wheel 3 are constantly kinematically coupled, so the gear wheel shaft is considered to be the output shaft of the mechanism which enables transmitting of the transformed motion energy. Driving levers 5, 6 are flexibly connected at the point *C* to the oscillating lever 4. Traveling of the oscillating lever 4 is prevented by limit stops 7, 8 and activating the cut-out elements 9, 10 prevents its traveling by means of their shape that enable its resting. Figure 5 presents one variant of the mechanism, which instead of the flexible connection has a sliding connection between the lever 5 and the oscillating lever 4.

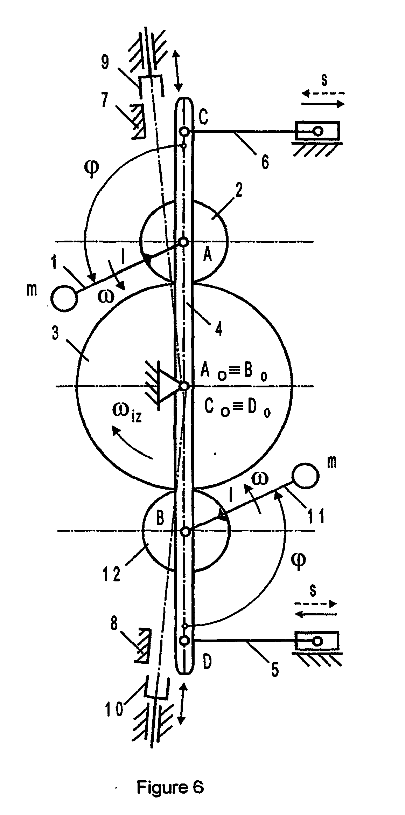

To provide partial mechanism balance it is possible to use two pendulums 1, 11, symmetrically arranged in reference to the central line of the sun wheel 3, presented in Figure 6. The positions of both pendulums 1, 11 in reference to the oscillating lever 4 are identical, and in case of identical parameters of the pendulum 1, the vertical forces of the mechanism are balanced.

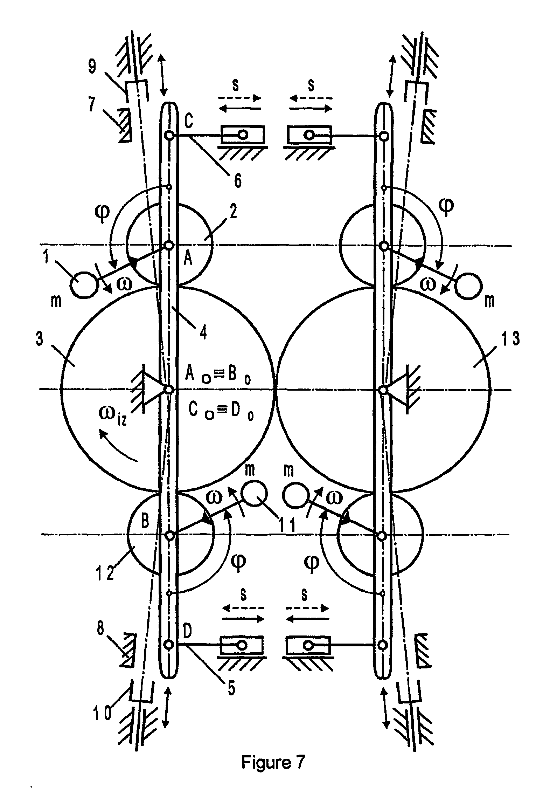

To provide complete mechanism balance it is necessary to design a structure presented in Figure 7, which includes two partially, balanced mechanisms. Sun wheels 3, 13 of the same dimensions, are constantly kinematically coupled; therefore transmitting of energy can be performed through one of them. Identical parameters of pendulums (*m* and *l*), the angle ϕ and gear wheel dimensions provide the balancing of both the internal and external forces throughout all intervals of mechanism motion.

### Industrial and other applications

The newly formed principle of motion transformation together with the suggested structural design and the mode of control enable modeling of the mechanism providing for the transformation of the oscillating into one-way circular motion which has a high coefficient of efficiency and is expected to be broadly applied to the internal combustion engines. The advantage of this mechanism is especially important in cases of oxygen-hydrogen mixture used as fuel producing power due to its impulsive force action during combustion.

## Claims

1. An inertial mechanism for transformation of short impulsive oscillatory displacements of a suspension point (A) into a one-way circular motion **characterized by** an oscillating lever. (4) which has its rotational axis correspondent to that of an output sun wheel (3) and is attached to the suspension point (*A*) of a pendulum (1) and further attached to flexibly connected driving levers (5, 6); said pendulum (1) of a mass (*m*) being firmly fixed to a planetary gear wheel (2); said planetary gear wheel (2) being constantly coupled with the sun wheel (3); and pairs of limit-stops (7, 8) and cut-out elements (9, 10) that alternatively make connection through their end parts with the oscillating lever (4) within intervals of its resting.

2. The inertial mechanism according to claim 1, **characterized in that** it comprises two pendulums (1, 11), each rigidly attached to one of two planetary gear wheels (2, 12), whereas the planetary gear wheels (2, 12) are constantly coupled with the outlet sun wheel (3), and whereas the planetary gear wheels (2, 12) are located symmetrically in reference to the axis of rotation of the sun wheel (3).

3. An inertial mechanism including two mechanisms according to claim 2, **characterized by** the mutual constant kinematic mesh of the sun wheels (3, 13).

## Patentansprüche

1. Trägheitsgetriebe zur Umwandlung von kurzen stoßartigen, periodischen Hubbewegungen eines Aufhängungspunktes (A) in eine einsinnig gerichtete Rotation, **dadurch gekennzeichnet, dass** ein schwingender Hebelarm (4), dessen Rotationsachse zu der eines abtreibenden Planetensonnenrades (3) korrespondiert, mit dem Aufhängungspunkt (A) eines Drehpendels (1) verbunden ist und weiterhin mit beweglich angekoppelten Antriebshebeln (5, 6) verbunden ist; wobei das Pendel (1) einer Masse (m) mit einem Planetengetrieberad (2) fest verbunden ist; wobei das Planetengetrieberad (2) permanent an das Planetensonnenrad (3) gekoppelt ist; und wobei Paare von Begrenzungsanschlägen (7, 8) und Halteelementen (9, 10) über ihre Enden abwechselnd mit dem schwingenden Hebelarm (4) während seiner Ruhemomente in Verbindung treten.

2. Trägheitsgetriebe nach Anspruch 2, **dadurch gekennzeichnet, dass** es zwei Pendel (1, 11) umfasst, wobei jedes Pendel (1, 11) mit jeweils einem von zwei Planetengetrieberädern (2, 12) fest verbunden ist; und wobei die Planetengetrieberäder (2, 12) permanent an das Planetensonnenrad (3) gekoppelt sind; und wobei die Planetengetrieberäder (2, 12) symmetrisch bezogen auf die Rotationsachse des Planetensonnenrades (3) angeordnet sind.

3. Trägheitsgetriebe, umfassend zwei Trägheitsgetriebe gemäß Anspruch 2, **dadurch gekennzeichnet, dass** die Planetensonnenräder (3, 13) permanent miteinander im kinematischen Eingriff stehen.

## Revendications

1. Mécanisme inertiel pour transformer des déplacements oscillatoires impulsifs courts d'un point de suspension (A) en un mouvement circulaire unidirectionnel,
**caractérisé par**
un levier oscillant (4) dont l'axe de rotation correspond à celui d'une roue solaire de sortie (3) et est fixé au point de suspension (A) d'un pendule (1) par des leviers d'entraînement (5, 6) reliés de manière flexible, ce pendule (1) de masse (m) étant fixé fermement à une roue d'engrenage planétaire (2) ; cette roue d'engrenage planétaire (2) étant couplée de façon constante à la roue solaire (3) ; et des paires de butées de fin de course (7, 8) et d'éléments de coupure (9, 10) qui forment une liaison alternative par leurs parties d'extrémité avec le levier oscillant (4) à des intervalles d'arrêt.

2. Mécanisme d'inertie selon la revendication 1,
**caractérisé en ce que**
deux pendules (1, 11) sont chacun fixés de manière rigide à une des deux roues d'engrenage planétaire (2, 12), alors que les roues d'engrenage planétaire (2, 12) sont couplées de façon constante à la roue solaire de sortie (3), et que les roues d'engrenage planétaire (2, 12) sont situées symétriquement par rapport à l'axe de rotation de la roue solaire (3).

3. Mécanisme d'inertie comprenant deux mécanismes selon la revendication 2,
**caractérisé par**
un engrènement cinématique mutuel constant des roues solaires (3, 13).
